# EUROPEAN PATENT APPLICATION

(11) **EP 0 945 318 A1**
(43) Date of publication of application: **29.09.1999**
(21) Application number: 98830168.5
(22) Date of filing: 23.03.1998
(51) Int. Cl.: B60S 9/12, B66C 23/78

(54) **Stabiliser leg for a load carrying vehicle**

(71) Applicant: F.LLI FERRARI S.p.A., 42022 Boretto (RE) (IT)
(72) Inventor: Marinelli, Francesco, 46100 Mantova (IT)
(74) Representative: Gotra, Stefano

(57) **Abstract**

The stabiliser arm for lifting and transport apparatus of loads borne on motor vehicles comprises a support beam (1) to which a first end of a linear actuator (3) is rotatably constrained about a horizontal axis, another end of the linear actuator (3) bearing a rest (4) fixed to a mobile element (5) mobile according to a sliding axis which is perpendicular to the rotation axis of the first end. The mobile element (5) can be located in at least two extreme positions, one of maximum extension and another of complete retraction. In the maximum extension position the actuator (3) assumes a first configuration, in which the rest (4) faces downwards, and a second configuration, in which the rest (4) faces upwards. An axially slidable cogged shaft (7) enmeshes with a fixed gearwheel (6) fixed on a beam (2) and causes a displacement of the linear actuator (3) from the first into the second configuration, directly interacting with the mobile element (5) following a displacement of the mobile element (5) from a maximum extension position into a completely retracted position.

## Description

Specifically but not exclusively the invention is usefully applied in self-propelled lifting and transport apparatus, such as cranes and, especially, cranes mounted on motor vehicles.

The prior art teaches stabiliser arms applied on practically horizontal support beams, each of which comprises a linear actuator, such as for example a hydraulic jack, having one end which is rotatable about a horizontal rotation axis and which is provided with a mobile element according to a sliding axis which is perpendicular to the rotation axis. In a work configuration, the linear actuator is rotated downwards, with the mobile element resting on the ground.

When not working, the stabiliser arm is not only brought into a collapsed minimum axial extension position, i.e. as small a volume as possible, but is also rotated upwards so as to be storable in the storage space therefore, usually on top of the vehicle frame. Owing to the objects which lorries usually equip laterally, such as wheels or other tools or devices, it is difficult to store stabiliser arms internally of the frontal outline shape of the lorry when the arms are collapsed downwards into the smallest volume thereof.

In the case of cranes mounted on lorries, the space available on the top of the frame is usually present in the central area located between the cab and the vehicle load space - the same space at the centre of which the crane itself is mounted. In the folded position, the stabiliser arm can be stored well within the frontal outline of the vehicle. The transversal displacement necessary is normally obtained through retraction of the support beam (bearing the actuator at one end) by an axial displacement.

In most prior-art stabilisers equipping small-load cranes, the upwards rotation of the linear actuator is done manually. In large-dimension cranes the rotation operation, thanks to the heaviness of the stabiliser arms, becomes dangerous and is legally prohibited.

Some prior-art realisations exist, however, in which the upwards rotation is carried out automatically, commanded by the retraction of the mobile element through a mechanism which, by means of pulleyed cable or chain transmissions, transforms the mobile element retraction movement into a rotation of the actuator about a horizontal axis which normally coincides with the axis of the support beam, to which the actuator is constrained.

These realisations, however, exhibit considerable drawbacks, all due to the structure and relative complexity of the mechanisms, which have volumes that notably exceed the actuator transversal dimensions and would require a special casing so that dangerous interference from the outside would be avoided.

The main aim of the present invention is to provide a stabilising arm able to obviate the above-mentioned drawbacks and limitations in the prior art.

An advantage of the invention is to make available an economical and constructionally simple arm with an extremely simple functioning.

A further advantage of the invention is to provide an arm in which the mechanisms for the rotation of the actuator are of a very contained volume and are easily contained within the protection casing of the actuator.

These aims and advantages and others besides are all attained by the invention as it is characterised in the claims that follow.

Further characteristics and advantages of the present invention will better emerge from the detailed description that follows of a preferred but non-exclusive embodiment of the invention, illustrated purely by way of non-limiting example in the accompanying figures of the drawings, in which:

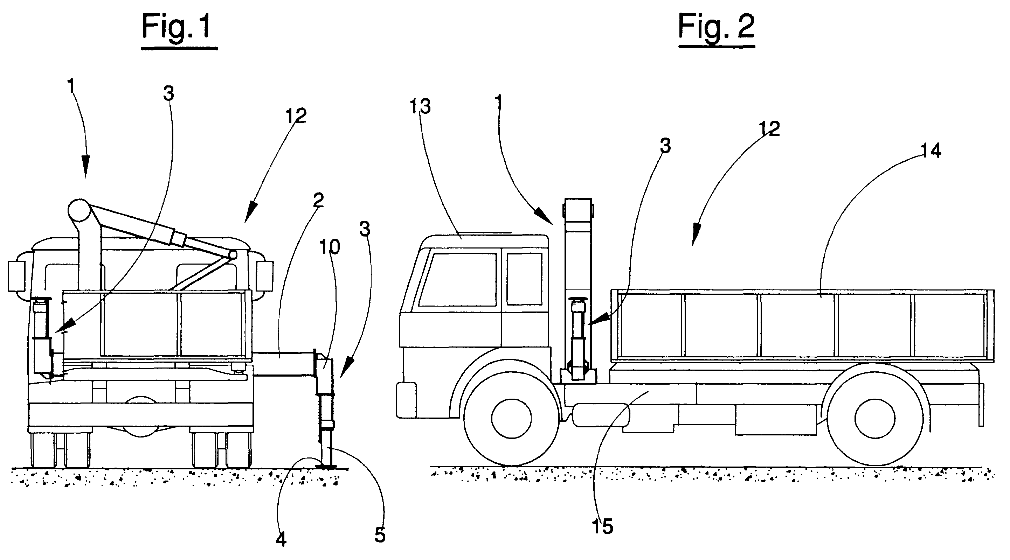

figure 1 shows an application of a lift apparatus mounted on a lorry;
figure 2 shows a left side view of figure 1;

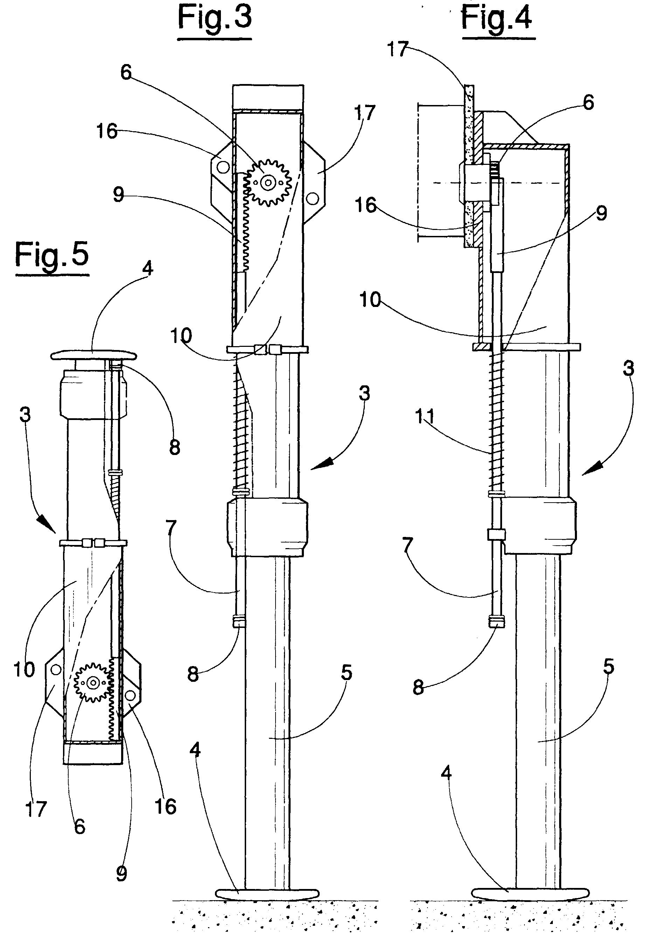

figure 3 shows a partially sectioned front view of the invention in the configuration where the invention is extended fully downwards;

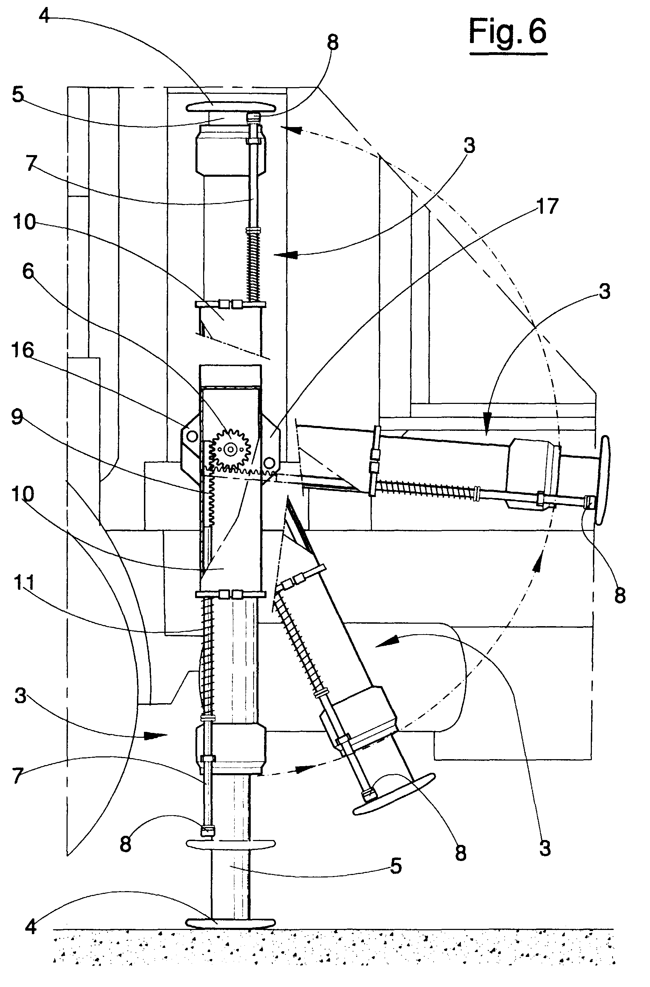

figure 4 is a partially sectioned lateral view from the left of figure 3;
figure 5 is a partially sectioned front view of the invention in the fully-retracted configuration;
figure 6 is a schematic front view of the passage from the maximum-extended configuration to the upwards-rotated minimum-extended configuration.

With reference to the figures of the drawings, 1 denotes in its entirety a lifting apparatus, constituted by a hydraulic crane mounted on a lorry 12. Situated between the cab and the skip 14 of the lorry 12 is a space housing the lifting apparatus 1.

To give the necessary stability to the lifting apparatus 1, stabilisers are associated to the frame 15 of the lorry 12, having the task of keeping the lorry firmly on the ground during a work period involving use of the lifting apparatus 1.

The stabilisers are essentially constituted by hydraulic jacks or, more generally, linear actuators 3, each of which is solidly constrained to the end of a support beam 2, which is normally horizontal. The support beam 3 is axially slidably connected to the frame 15, so that when the lifting apparatus 1 is used, the jack or actuator 3 can be extracted from within the front outline of the lorry 12 and increase the rest base of the vehicle.

A first end of the actuator 3 is constrained to the support beam 2 so as to be able to perform controlled rotations about a horizontal axis which, in the embodiment illustrated, is parallel to the geometrical axis of the support beam 2 and practically coincident there-with.

The actuator 3 has another end provided with a rest 4 fixed to a mobile element 5 according to a sliding axis which is perpendicular to said rotation axis. The mobile element 5 is in fact the stem of the jack constituting the actuator 3. The stem is mobile according to a sliding axis - the same axis as the actuator - which is perpendicular to the rotation axis.

Obviously the mobile element 5 can on command, assume two extreme positions: maximum extension and maximum retraction.

The whole linear actuator 3 is able to assume, on command at least a first configuration, in which the rest 4 is turned downwards, and a second configuration, in which the rest 4 is turned upwards.

Special control means command the rotation of the linear actuator 3 from the first to the second configuration, precisely by moving the mobile element 5 from the maximum extension position, or in any case a position comprised between the maximum extension and the minimum extension, into the retracted and gathered minimum configuration.

The control means comprise a gearwheel 6, fixed and coaxial to the rotation axis about which the actuator 3 is hinged, which gearwheel 6 enmeshes with an at least partially geared shaft 7 having a straight rack-type cogging 9 at an end thereof.

The shaft 7 is constrained to the linear actuator 3 so as to be axially slidable only in a parallel direction to the movement axis of the mobile element 5, and so that a sliding of predetermined entity of the shaft 7 causes a corresponding rotation of a predetermined entity of the linear actuator 3.

The shaft 7 is provided with a striker predisposed to act against a corresponding organ which is made solid to said mobile element 5 according to the relative position assumed by said mobile element 5 with respect to said first end of the linear actuator 3. The organ interacts with said striker during the course of the retraction movement of the mobile element 5, which direction is defined by the axial displacement from sad maximum extension position into gathered minimum axial extension position. The striker is the head 8 of the shaft 7, situated at the opposite end thereof from the rack 9, while said organ solidly constrained to the mobile element 5 is constituted by the rest 4 situated at the end of the mobile element 5.

The shaft 7 is axially constrained to the body 10 (to which the first end of the actuator 3 belongs) by a spring 11.

The spring 11 is predisposed to exert an antagonist action against the axial displacement induced on the shaft 7, due to the contact between the head 8 and the rest 4, by the retraction movement of the element 5 towards said minimum extension position.

The shaft 7 is predisposed in such a way and of such dimensions that in the position of maximum extension of the mobile element 5, there remains a predetermined distance between the rest 4 and the head 8. This distance corresponds to the portion of run that the element 5 can, on command, perform freely without any axial movement of the shaft 7 being produced, and thus without any rotation being imparted on the actuator 3.

The actuator 3 is rotated whenever during the retraction run the rest 4 intercepts the head 8, forcing the shaft 7 to translate axially notwithstanding the antagonist action of the coaxial spring 11.

Since the gearwheel 6, which enmeshes with the rack 9 on the shaft 7, is fixed to the support beam 2, the result of the relative motion, consequent to the axial displacement of the shaft 7 itself is a rotation of the whole actuator 3 about the gearwheel 6 axis.

The rack 9 and the gearwheel 6 are related to the run of the shaft 7 in such a way that on completion of said run the actuator is arranged in the vertical configuration.

The passage from this vertical configuration of minimum extension into that of maximum extension, once more vertical but with the rest 4 facing downwards, is automatically achieved through the action of the spring 11.

To keep the actuator stably anchored in the two opposite configurations, a mechanical lock is employed which is realised by means of a locking pin between a flange 16, solidly constrained to the actuator 3, and a flange 17 solidly constrained to the support beam 2, facing one another and hinged about the rotation axis.

An advantage of the present invention consists in the fact that all the mechanically connected organs forming the mechanism are housed internally of a container which the operator cannot access.

## Claims

1. A stabiliser arm for lifting apparatus and transport of loads borne on motor vehicles, comprising a support beam (1) to which a first end of a linear actuator (3) is constrained with ability to rotate about a horizontal axis; said linear actuator (3) exhibiting at another end thereof a rest (4) fixed to a mobile element (5) at a sliding axis which is perpendicular to said rotation axis; said mobile element (5) being able to assume at least two extreme positions, namely a maximum extension position and a completely retracted position; the linear actuator (3) also being able to assume at least a first configuration, in which the rest (4) is turned downwards, and a second configuration, in which the rest (4) is turned upwards; characterised in that the arm comprises means for controlling a displacement of the linear actuator (3) from said first to said second configurations following a displacement of the mobile element (5) from a position comprised between the maximum extension position and the completely retracted position.

2. The arm of claim 1, characterised in that the means for controlling comprise a fixed-axis gearwheel (6), coaxial to the rotation axis of the mobile element (5), which enmeshes with an at least partially cogged shaft (7) constrained to the linear actuator (3) and able to slide only axially in a parallel direction to the sliding axis of said mobile element (5); a sliding of predetermined entity of the cogged shaft (7) causing a corresponding rotation of a predetermined entity of the linear actuator (3).

3. The arm of claim 2, characterised in that the cogged shaft (7) is provided with a striker predisposed to interact strikingly with a corresponding organ solidly constrained to said mobile element (5), a contact between said striker and said organ depending on the relative position assumed by said mobile element (5) with respect to said first end of the linear actuator (3); said organ interacting with said striker during a retraction movement of said mobile element (5) when said mobile element (5) is retracting from said position of maximum axial extension to said completely retracted position.

4. The arm of claim 3, characterised in that said striker is constituted by a head (8) of the cogged shaft (7); said head (8) being an end of said shaft (7) which is opposite to a cogged end of said shaft, which cogged end enmeshes with the fixed gearwheel (6).

5. The arm of claim 4, characterised in that said organ constrained to said mobile element (5) is constituted by the rest (4) situated at an end of said mobile organ (5).

6. The arm of claim 5, characterised in that the cogged shaft (7) is axially constrained to a body (10) of the actuator, which body (10) also includes the first end of the actuator (3), by means of a spring (11) predisposed to exert an action which is opposite to an axial displacement induced on the shaft (7) by effect of a contact between the head (8) and the rest (4) due to the retracting motion of the mobile organ (5).

7. The arm of claim 6, characterised in that the shaft (7) is predisposed such that a predetermined distance remains between the rest (4) and the head (8) in the position of maximum extension of the mobile element (5).

8. The arm of any one of the preceding claims, characterised in that it comprises means for releasably locking the linear actuator (3) at least in said first and second configurations.
